# EUROPEAN PATENT APPLICATION

(11) **EP 4 718 506 A1**
(43) Date of publication of application: **01.04.2026**
(21) Application number: 25199924.9
(22) Date of filing: 03.09.2025
(51) Int. Cl.: H01M 4/04, H01M 4/133, H01M 4/1393, H01M 4/36, H01M 4/134, H01M 4/1395, H01M 4/38, H01M 4/587, H01M 4/62

(54) **NEGATIVE ELECTRODE OF SECONDARY BATTERY, METHOD FOR MANUFACTURING THE NEGATIVE ELECTRODE, AND SECONDARY BATTERY USING THE NEGATIVE ELECTRODE**

(30) Priority: 27.09.2024 JP 2024169480
(71) Applicant: Prime Planet Energy & Solutions, Inc., Chuo-ku, Tokyo 103-0022 (JP)
(72) Inventor: KANG, Surim, Tokyo, 103-0022 (JP)
(74) Representative: Kuhnen & Wacker Patent- und Rechtsanwaltsbüro PartG mbB

(57) **Abstract**

A negative electrode containing Si-C composite particles (10) and graphite particles (14), and capable of suppressing capacity degradation when a secondary battery is repeatedly charged and discharged is provided. The negative electrode of a secondary battery of the present disclosure includes a negative electrode current collector (62), and a negative electrode active material layer supported by the negative electrode current collector. The negative electrode active material layer contains graphite particles and Si-C composite particles as a negative electrode active material. Each of the Si-C composite particles includes a porous skeleton (11) made of carbon, and Si-containing particles located in voids (11a) of the porous skeleton. A coating (13) including LiF is formed on at least a part of an outer surface of each of the Si-C composite particles.

## Description

### BACKGROUND OF THE DISCLOSURE

### 1. Field

The present disclosure relates to a negative electrode of a secondary battery, and a method for manufacturing the negative electrode. The present disclosure also relates to a secondary battery using the negative electrode.

### 2. Background

In recent years, secondary batteries are suitably used for, for example, portable power sources for personal computers, portable terminals, and the like, and power sources for driving vehicles such as battery electric vehicles (BEV), hybrid electric vehicles (HEV), and plug-in hybrid electric vehicles (PHEV).

In application of power sources for driving a vehicle, in particular, application of power sources for driving BEV, secondary batteries have been required to have higher capacities from the viewpoint of increasing traveling distance of vehicles. Si-C composite particles are known as a negative electrode active material having high capacity. It is known that the Si-C composite particles achieve higher capacity of secondary batteries (see, for example, Japanese Patent Application Laid-Open No. 2015-38862 and Japanese Unexamined Patent Application (Translation of PCT Application), Publication No. No. 2019-522886). Japanese Patent Application Laid-Open No. 2015-38862 discloses a technique using both Si-C composite particles and graphite particles such as natural graphite together as the negative electrode active material. Japanese Unexamined Patent Application (Translation of PCT Application), Publication No. No. 2019-522886 discloses, as a negative electrode active material, composite particles in which Si-LiF mixed particles including Si coated with LiF are dispersed in a carbon phase made of a carbon material.

### SUMMARY

However, in conventional technologies, a secondary battery including a negative electrode using both Si-C composite particles and graphite particles together has a problem that cycle characteristics are low, specifically, a problem that capacity degradation becomes large when the secondary battery is repeatedly charged and discharged.

In view of the above circumstances, an object of the present disclosure is to provide a negative electrode containing Si-C composite particles and graphite particles and being capable of suppressing capacity degradation when the secondary battery is repeatedly charged and discharged.

A negative electrode of a secondary battery of the present disclosure includes a negative electrode current collector, and a negative electrode active material layer supported by the negative electrode current collector. The negative electrode active material layer contains graphite particles and Si-C composite particles as negative electrode active materials. Each of the Si-C composite particles includes a porous skeleton made of carbon, and Si-containing particles located in voids of the porous skeleton. A coating including LiF is formed on at least a part of the outer surface of each of the Si-C composite particles.

Such a configuration can provide a negative electrode containing Si-C composite particles and graphite particles and capable of suppressing capacity degradation when the secondary battery is repeatedly charged and discharged.

In another aspect, a method for manufacturing a negative electrode of a secondary battery of the present disclosure includes steps of: preparing Si-C composite particles including a porous skeleton made of carbon, Si-containing particles located in voids of the porous skeleton, and a coating including LiF formed on at least a part of an outer surface; preparing a negative electrode paste by mixing the Si-C composite particles and graphite particles in a dispersion medium; applying the negative electrode paste to a negative electrode current collector; and drying the applied negative electrode paste. The step of preparing the Si-C composite particles includes allowing a water-soluble lithium salt and a fluorinating agent to react in a dispersion in which particles including the porous skeleton made of carbon and the Si-containing particles located in voids of the porous skeleton are dispersed in water or a water-soluble organic solvent, to generate LiF.

The negative electrode obtained by such a configuration can impart high capacity degradation resistance to a secondary battery when the secondary battery is repeatedly charged and discharged.

In another aspect, a secondary battery of the present disclosure includes a positive electrode, a negative electrode, and an electrolyte. This negative electrode is the negative electrode described above.

Such a configuration can provide a secondary battery with high capacity degradation resistance when the secondary battery is repeatedly charged and discharged.

### BRIEF DESCRIPTION OF THE DRAWINGS

FIG. 1 is a sectional view schematically showing a configuration of a negative electrode of a secondary battery according to a first embodiment of the present disclosure;
FIG. 2 is a sectional view schematically showing a configuration of a Si-C composite particle included in a negative electrode active material layer of the negative electrode of FIG. 1;
FIG. 3 is a sectional view schematically showing particles included in a negative electrode active material layer according to a second embodiment of a negative electrode of a secondary battery of the present disclosure;
FIG. 4 is a sectional view schematically showing a configuration of a lithium ion secondary battery constructed using a negative electrode of a secondary battery of the present disclosure; and
FIG. 5 is a schematic disassembled view showing a configuration of a wound electrode body of the lithium ion secondary battery of FIG. 4.

### DETAILED DESCRIPTION OF THE EMBODIMENTS

Hereinafter, embodiments according to the present disclosure will be described with reference to the drawings. Matters not specifically mentioned in this specification but required for carrying out the present disclosure can be understood as matters of design of a person skilled in the art based on the related art in the field. The present disclosure can be carried out on the basis of the contents disclosed in this specification and the common general technical knowledge in the field. Moreover, in the drawings below, members and parts having the same effect will be given the same reference numerals. The dimensional relationships (length, width, thickness, and the like) in each drawing do not reflect the actual dimensional relationships. It should be noted that in this specification, A and B are included in the numerical range expressed as "A to B".

It should be noted that a "secondary battery" in this specification refers to an electricity storage device capable of being repeatedly charged and discharged. Furthermore, a "lithium ion secondary battery" in this specification refers to a secondary battery that uses lithium ions as charge carriers and that can be charged and discharged by movement of electric charges accompanying lithium ions between positive and negative electrodes.

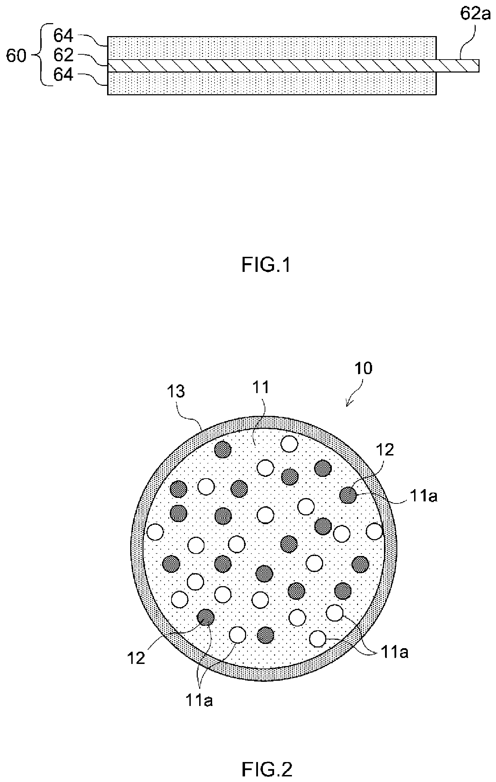

A negative electrode of the present disclosure is used for a secondary battery, and suitably used for a lithium ion secondary battery. The negative electrode according to the first embodiment is specifically described as an example of the negative electrodes of the present disclosure with reference to FIG. 1.

### [First Embodiment]

FIG. 1 is a sectional view schematically showing a negative electrode 60 of an example according to the first embodiment, and the sectional view is along a thickness direction and a width direction. The negative electrode 60 according to the first embodiment shown in FIG. 1 is a negative electrode of a lithium ion secondary battery.

As shown in the drawing, the negative electrode 60 includes a negative electrode current collector 62, and a negative electrode active material layer 64 supported by the negative electrode current collector 62. In other words, the negative electrode 60 includes the negative electrode current collector 62, and the negative electrode active material layer 64 provided on the negative electrode current collector 62. The negative electrode active material layer 64 may be provided only on one surface of the negative electrode current collector 62 or may be provided on both surfaces of the negative electrode current collector 62 as shown in the drawing. The negative electrode active material layer 64 is desirably provided on both surfaces of the negative electrode current collector 62.

As shown in the drawing, a negative electrode active material layer non-formed portion 62a that is not provided with the negative electrode active material layer 64 may be provided at one end in the width direction of the negative electrode 60. In the negative electrode active material layer non-formed portion 62a, the negative electrode current collector 62 is exposed so that the negative electrode active material layer non-formed portion 62a can function as a current collecting part. However, the configuration for collecting current from the negative electrode 60 is not limited to this.

The negative electrode current collector 62 has a foil shape (or a sheet shape) in the example shown in the drawing, but is not limited to this shape. The negative electrode current collector 62 may have various forms such as a rod shape, a plate shape, or a mesh shape. The material for the negative electrode current collector 62 can be a highly conductive metal (for example, copper, nickel, titanium, and stainless steel) in a manner the same as or similar to a conventional lithium ion secondary battery, and among them, copper is desirable. As the negative electrode current collector 62, copper foil is particularly desirable.

Dimensions of the negative electrode current collector 62 are not particularly limited, and may be appropriately determined depending on battery design. When copper foil is used as the negative electrode current collector 62, the thickness of the foil is not particularly limited, and is, for example, 5 µm or more and 35 µm or less, and desirably 6 µm or more and 20 µm or less.

The negative electrode active material layer 64 contains a negative electrode active material. As the negative electrode active material, at least graphite particles and Si-C composite particles are used.

Graphite constituting the graphite particles may be natural graphite or artificial graphite, and may be amorphous carbon-coated graphite in which graphite is coated with an amorphous carbon material.

The shape of the graphite particles is not particularly limited, and may be a scaly shape, a spherical shape, or the like. The graphite particles are desirably spheroidized graphite particles. When the graphite particles are spherical, the circularity of the graphite particles is desirably 0.85 to 1, more desirably 0.88 to 1, and further desirably 0.90 to 1.

It should be noted that the "circularity" in this specification refers to a ratio of a circumference of a complete circle having the same area as a projected area of particle to a circumference of a projected image of the particle (i.e., circularity = circumference of complete circle having the same area as projected area of particle / circumference of projected image of particle). Accordingly, as the circularity is closer to 1, the particle projected image is closer to a complete circle, and the particle approaches a complete sphere. The circularity can be obtained by, for example, obtaining circularities of 100 or more particles using a commercially available static automated image analyzer and calculating an average of the obtained circularities.

The average particle diameter (D50) of the graphite particles is not particularly limited. The average particle diameter (D50) of the graphite particles is, for example, 1 µm to 30 µm, desirably 5 µm to 25 µm, more desirably 10 µm to 23 µm, and further desirably 12 µm to 20 µm.

It should be noted that the "average particle diameter (D50)" in this specification refers to a median diameter (D50), and refers to a particle diameter corresponding to 50% by volume of a cumulative frequency from the small-diameter particle side in volume-based particle size distribution based on a laser diffraction and scattering method. The average particle diameter (D50) can be obtained by using, for example, a commercially available laser diffraction and scattering type particle size distribution measurement device.

The content rate of graphite particles with respect to the total of the graphite particles and Si-C composite particles is desirably 40% by mass to 90% by mass, more desirably 45% by mass to 85% by mass, and further more desirably 50% by mass to 80% by mass.

The Si-C composite particles used in the present disclosure will be described in detail with reference to FIG. 2. FIG. 2 is a schematic sectional view of an example of one of the Si-C composite particles. The Si-C composite particle 10 shown in FIG. 2 includes a porous skeleton 11 made of carbon, and Si-containing particles 12. On at least a part of the outer surface of the Si-C composite particle 10, a coating 13 including LiF is formed.

Examples of carbon materials constituting the porous skeleton 11 include a carbonized material of a carbon precursor (for example, petroleum pitch, coal pitch, and phenolic resin); graphite; hard carbon; soft carbon, and the like.

The porous skeleton 11 includes a plurality of voids 11a. Distribution and amount of the voids of the porous skeleton 11 are not particularly limited to the examples shown in the drawing, and may be the same as those of the publicly known porous carbon materials.

The Si-containing particle 12 is constituted by, for example, Si, Si oxide (SiOₓ), Si nitride (SiNₓ), Si carbide (SiCₓ), or the like. The Si-containing particle 12 is desirably constituted by least one of Si or Si oxide (SiOₓ). The content of oxygen in the Si-containing particle 12 is desirably 10% by mass or less.

The Si-containing particles 12 enter inside the voids 11a of the porous skeleton 11. In other words, the Si-containing particles 12 are located in the voids 11a. The porous skeleton 11 functions to suppress expansion of the Si-containing particles 12 during charging of a secondary battery. Therefore, when the Si-containing particles 12 are located inside the voids 11a, stress generated by the expansion of the Si-containing particles 12 during charging of the secondary battery can be reduced by the porous skeleton 11.

In the example shown in FIG. 2, some voids 11a do not include the Si-containing particle 12, but all voids 11a may include the Si-containing particle 12. However, since stress generated due to the expansion of the Si-containing particles 12 during charging of the secondary battery can be reduced by the voids 11a, it is advantageous that the porous skeleton 11 includes some voids 11a that do not include a Si-containing particles 12.

In the example shown in FIG. 2, one Si-containing particle 12 enters one void 11a of the porous skeleton 11. However, two or more Si-containing particles 12 may enter one void 11a.

Furthermore, in the void 11a in which the Si-containing particle 12 enters, the Si-containing particle 12 may completely fill the void 11a, or a gap may remain in the void 11a. When a gap remains in the void 11a, stress generated due to the expansion of the Si-containing particles 12 during charging of a lithium ion secondary battery can be reduced by the gap.

The average particle diameter of the Si-containing particles is, for example, 50 nm or less and may be 5 nm to 50 nm. It should be noted that the "average particle diameter of Si-containing particles" can be obtained as follows. Firstly, the negative electrode active material layer 64 is subjected to a FIB (focused ion beam) processing to produce a sample for scanning transmission electron microscopic (STEM) observation. The sample is subjected to an element analysis by EDX element mapping, and then a BF image (bright field image) and a HAADF image (high angle annular dark field image) are acquired. From contrasts and shapes obtained from the BF image and the HAADF image, diameters of the Si-containing particles can be obtained. Diameters of arbitrarily selected 10 or more Si-containing particles are obtained, and an average value of the diameters is defined herein as an "average particle diameter of the Si-containing particles".

The content rate of Si in the Si-C composite particles 10 is not particularly limited. When the content rate of Si is higher, higher capacity of a secondary battery can be achieved, but an expansion amount of the Si-C composite particles 10 is increased. Therefore, the content rate of Si in the Si-C composite particles 10 is desirably 20% by mass to 80% by mass, and more desirably 25% by mass to 75% by mass. It should be noted that the content rate of Si in the Si-C composite particles 10 can be obtained by high frequency inductive coupling plasma (ICP) emission spectrochemical analysis. It should be noted that this content rate of Si in the Si-C composite particles 10 is a mass percentage of Si with respect to the total mass of the porous skeleton 11 and the Si-containing particles 12. Therefore, the Si mass percentage can be calculated without including a mass of the coating 13.

On at least a part of the outer surface of the Si-C composite particles 10, the coating 13 including LiF is formed. Therefore, the coating 13 including LiF is formed on at least the outer surface of the porous skeleton 11.

It is known that in initial charging of the secondary battery, a SEI film is formed on a surface of the negative electrode active material by decomposition of the nonaqueous electrolytic solution. As a result of studies, the present inventors have found that the causes of degradation in capacity when the secondary battery is repeatedly charged and discharged in prior art are as follows.

The Si-C composite particle (in particular, Si-containing particle) has very high expansion rate during charging of the secondary battery. Therefore, when the secondary battery is charged, the SEI film formed on the surface of the negative electrode active material (that is, Si-C composite particle) may be broken due to expansion. When the SEI film is broken, a surface of the negative electrode active material is exposed, and nonaqueous electrolytic solution is decomposed in the exposed portion, and a SEI film is formed again. When the secondary battery is repeatedly charged and discharged, the SEI film is repeatedly broken and formed again, and the battery capacity irreversibly decreases.

On the contrary, in this embodiment, the Si-C composite particle 10 includes coating 13 including LiF on its outer surface. The coating 13 including LiF has the same function as that of the SEI film, while it can follow the expansion of the Si-C composite particle 10. As a result, breaking of the coating 13 of the Si-C composite particle 10 can be suppressed, thus reformation of the SEI film is less likely to occur. As a result, irreversible decrease in battery capacity mentioned above can be suppressed.

Therefore, when the coverage rate of the Si-C composite particles 10 with the coating 13 including LiF is larger, the effect of suppressing capacity degradation in repetitive charge and discharge becomes larger. Accordingly, the coverage rate is desirably 20% or more, more desirably 50% or more, further desirably 80% or more, and particularly desirably 100%. Therefore, as shown in FIG. 2, it is particularly desirable that the coating 13 including LiF forms a layer covering an entire outer surface of the Si-C composite particle 10. It should be noted that the coverage rate can be obtained as follows. A cross-sectional electron microscope image of the Si-C composite particle 10 is acquired. In the image, the rate (percentage) of the total length of the coating with respect to the circumference length of the porous skeleton 11 is calculated. The rate is calculated for arbitrarily selected 5 or more SiC composite particles 10, and the average value is obtained and defined as the coverage rate.

In the coating 13 including LiF, it is desirable that the content rate of LiF is larger. The content rate of LiF in the coating 13 (in other words, the concentration of LiF) corresponds to a ratio of the peak intensity of F of LiF to a peak intensity of F of other than LiF in the X-ray photoelectron spectroscopy (XPS) spectrum of the Si-C composite particle 10 measured by XPS. The ratio of the peak intensity of F of LiF to the peak intensity of F of other than LiF is usually 0.200 or more, desirably 0.250 or more, more desirably 0.300 or more, and further desirably 0.350 or more. It should be noted that in the XPS spectrum, the peak of F of LiF appears in a rage of 683 eV to 686 eV. The peak of F of other than LiF is a peak of F out of the range of 683 eV to 686 eV and can appear particularly in a range of 687 eV to 690 eV.

In the example shown in FIG. 2, the Si-C composite particle 10 has a spherical shape, but the shape is not particularly limited to this. The Si-C composite particle 10 may be, for example, an amorphouse shape.

The average particle diameter (D50) of the Si-C composite particles 10 is not particularly limited. The average particle diameter (D50) of the Si-C composite particles 10 is, for example, 1 µm to 15 µm, desirably 2 µm to 10 µm, and more desirably 4 µm to 10 µm.

The content rate of the Si-C composite particles 10 with respect to the total of the graphite particles and the Si-C composite particles 10 is desirably 10% by mass to 60% by mass, more desirably 15% by mass to 55% by mass, and further desirably 20% by mass to 50% by mass.

The negative electrode active material may include only graphite particles and the SiC composite particles 10. Alternatively, the negative electrode active material may further contain a negative electrode active material other than graphite particles and the Si-C composite particles 10 as long as the effects of the present disclosure are not significantly impaired. For example, Si-C composite material particles that do not include a coating may further be contained.

The negative electrode active material layer 64 may contain components other than the negative electrode active material, and examples of the components include a binder, a conductive material, and the like. Examples of the binder used include styrene-butadiene rubber (SBR), carboxymethyl cellulose (CMC), polyacrylic acid (PAA), polyvinylidene fluoride (PVdF), and the like. CMC also functions as a thickener. Examples of the conductive material include carbon black such as acetylene black, carbon fibers, carbon nanotubes (CNT), and the like. Among these, CNT is desirable. When CNT is used as the conductive material, the negative electrode active material layer 64 may contain a dispersing agent of CNT.

The content of the negative electrode active material in the negative electrode active material layer 64 (that is, with respect to the total mass of the negative electrode active material layer 64) is desirably 90% by mass or more, and more desirably 95% by mass or more. The content of the binder in the negative electrode active material layer is desirably 0.1% by mass or more and 8% by mass or less, and more desirably 0.5% by mass or more and 5% by mass or less. The content of the conductive material in the negative electrode active material layer 64 is desirably 0.01% by mass or more and 3% by mass or less, and more desirably 0.05% by mass or more and 1% by mass or less.

The thickness of the negative electrode active material layer 64 is not particularly limited, and is, for example, 10 µm or more and 400 µm or less, and desirably 20 µm or more and 300 µm or less.

The density of the negative electrode active material layer 64 is not particularly limited, and is, for example, 0.7 g/cm³ or more, desirably 1.0 g/ cm³ or more, and more desirably 1.2 g/ cm³ or more. On the other hand, the density of the negative electrode active material layer 64 is, for example, 2.3 g/ cm³ or less, and may be 2.0 g/ cm³ or less.

The negative electrode 60 may include a member other than the negative electrode current collector 62 and the negative electrode active material layer 64. For example, an insulating layer (not shown) adjacent to the negative electrode active material layer 64 may be provided on the negative electrode active material layer non-formed portion 62a. The insulating layer contains, for example, insulating inorganic fillers.

Next, a suitable method for manufacturing a negative electrode 60 is described. The suitable method for manufacturing negative electrode 60 includes steps of preparing Si-C composite particles 10 including a porous skeleton 11 made of carbon, Si-containing particles 12 located in voids 11a of the porous skeleton 11, and a coating 13 including LiF formed on at least a part of an outer surface (hereinafter, also referred to as "Si-C composite particles preparation step"); preparing a negative electrode paste by mixing the Si-C composite particles 10 and graphite particles in a dispersion medium (hereinafter, also referred to as "paste preparation step"); applying the negative electrode paste to a negative electrode current collector (hereinafter, also referred to as "application step"); and drying the applied negative electrode paste (hereinafter, also referred to as "drying step"). The step of preparing the Si-C composite particles includes allowing a water-soluble lithium salt and a fluorinating agent to react with each other in a dispersion in which particles including the porous skeleton 11 made of carbon and the Si-containing particles 12 located in the voids 11a of the porous skeleton 11 are dispersed in water or a water-soluble organic solvent to generate LiF. Hereinafter, each step of the manufacturing method is described in detail.

It should be noted that the "paste" in this specification refers to a mixture in which a solid content is partially or entirely dispersed in a dispersion medium, and encompasses so-called "slurry," "ink," and the like.

In the Si-C composite particles preparation step, particles including the porous skeleton 11 made of carbon and the Si-containing particles 12 located in voids 11a of the porous skeleton 11 (hereinafter, referred to as "non-coated particles") are prepared. Such non-coated particles are publicly known (see, for example, Japanese Patent Application Laid-Open No. 2015-38862, International Patent Publication No. 2014/046144, and the like). Therefore, non-coated particles can be produced and prepared according to publicly known methods.

Next, in a dispersion in which the non-coated particles are dispersed in water or a water-soluble organic solvent, the water-soluble lithium salt and the fluorinating agent are allowed to react with each other to generate LiF.

Examples of the water-soluble organic solvent include alcohols such as ethanol. Examples of the water-soluble lithium salt include lithium acetate (dihydrate), lithium carbonate, lithium nitrate, lithium chloride, lithium hydroxide, and the like, and desired is lithium acetate (dihydrate). Examples of the fluorinating agent include hydrofluoric acid, ammonium fluoride, acidic ammonium fluoride, and the like, and desired is ammonium fluoride.

In this operation, for example, firstly, an aqueous solution of water-soluble lithium salt, a dispersion in which non-coated particles are dispersed in water or a water-soluble organic solvent, and an aqueous solution of a fluorinating agent are prepared. The aqueous solution of water-soluble lithium salt and the dispersion are mixed to produce a liquid mixture. The aqueous solution of a fluorinating agent is added to the liquid mixture under stirring. Thereby, the water-soluble lithium salt and the fluorinating agent are allowed to react with each other to generate LiF. Conesequently, a reaction solution including LiF is obtained. The reaction solution includes non-coated particles.

The reaction conditions for the water-soluble lithium salt and the fluorinating agent may be the same as or similar to publicly known synthesis conditions of LiF using a water-soluble lithium salt and a fluorinating agent. For example, the reaction can be carried out at room temperature (that is, 25°C ± 10°C) and may be carried out under heating. Furthermore, the reaction time may be appropriately determined according to the concentration of the water-soluble lithium salt and the fluorinating agent in the reaction solution, the desired content rate of LiF in the coating 13, and the like. The longer the reaction time is, the higher the content rate of LiF in the coating 13 is.

The non-coated particles are recovered from the reaction solution in a state in which the reaction solution including formed LiF is attached to the surface, and the non-coated particles to which the reaction solution including formed LiF is attached are dried. Thereby LiF can be attached to the surface of the uncoated particles, and the Si-C composite particles 10 having the coating 13 including LiF can be obtained. **In** order to adjust the amount of the coating, the reaction solution including formed LiF may be diluted with water or the like.

The paste preparation step can be carried out according to a publicly known method by mixing graphite particles, Si-C composite particles 10, and optional components (for example, a binder and the like) with a dispersion medium (for example, water), using a publicly known mixer, stirrer or the like.

The application step can be carried out according to a publicly known method. Specifically, for example, the application can be carried out in such a manner that the obtained negative electrode paste is applied onto the negative electrode current collector 62 with an application device such as a gravure coater, a comma coater, a slit coater, and a die coater.

The drying step can be performed according to a publicly known method. Specifically, for example, the above dispersion medium is removed, with a drier such as a drying furnace, from the negative electrode current collector 62 onto which the negative electrode paste has been applied, thereby forming the negative electrode active material layer 64. Thus, the drying can be carried out. A drying temperature and drying time are not particularly limited, and may be determined appropriately according to a solid content of the negative electrode paste. The drying temperature is, for example, 60°C or more and 200°C or less, desirably 70°C or more and 150°C or less. The drying time is, for example, 10 seconds or more and 30 minutes or less, and desirably 30 seconds or more and 10 minutes or less.

After the drying step, a step of pressing the negative electrode active material layer 64 may further be carried out. The pressing can be carried out according to a publicly known method. Specifically, a pressure is applied to the above formed negative electrode active material layer 64 using, for example, a roller press, thereby carrying out the pressing step. Through the pressing step, graphite particles and Si-C composite particles 10 included in the negative electrode active material layer 64 can be densely filled. As mentioned above, a negative electrode 60 can be obtained.

In the first embodiment, as the Si-C composite particle, one type of Si-C composite particle is used. However, as the Si-C composite particle, two or more types of Si-C composite particles may be used. Then, as another example of a negative electrode of the present disclosure, a negative electrode of a second embodiment is described.

### [Second embodiment]

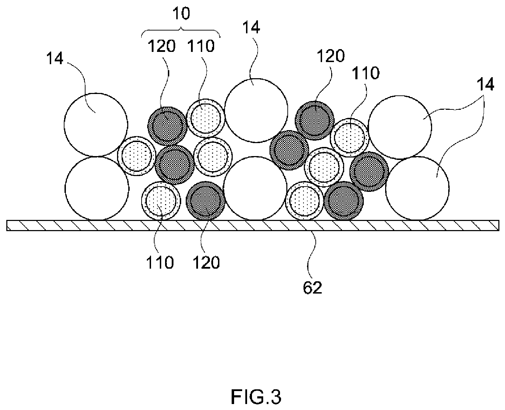

FIG. 3 is a schematic sectional view showing particles included in a negative electrode active material layer 64 of a negative electrode of a second embodiment. The negative electrode active material layer 64 contains graphite particles 14, first Si-C composite particles 110, and second Si-C composite particles 120. The second embodiment is different from the first embodiment in that the first Si-C composite particles 110 and the second Si-C composite particles 120 are used for the Si-C composite particles 10. The same points as the first embodiment are not described. It should be noted that FIG. 3 is a schematic view, and filling state of particles is not limited to the example shown in the drawing.

In the second embodiment, the content rate of Si (S1) in the first Si-C composite particles 110 is lower than the content rate of Si (S2) in the second Si-C composite particles 120. The content rate of Si (S1) in the first Si-C composite particles 110 and the content rate of Si (S2) in the second Si-C composite particles 120 are not particularly limited as long as the above relation is satisfied. When these content rates of Si are too low, the effect of improving the cycle characteristics is decreased, and the effect of achieving higher capacity of the secondary battery may be decreased. On the other hand, when these content rates of Si are too high, a change in volume due to expansion/contraction of the first Si-C composite particles 110 and the second Si-C composite particles 120 may become too large when the secondary battery is repeatedly charged and discharged.

Therefore, the content rate of Si (S1) in the first Si-C composite particles 110 is desirably 20% by mass to 55% by mass, and more desirably 25% by mass to 45% by mass. The content rate of Si (S2) in the second Si-C composite particles 120 is desirably 45% by mass to 80% by mass, and more desirably 55% by mass to 75% by mass. It should be noted that the content rate of Si (S1) and the content rate of Si (S2) can be obtained by a high frequency inductive coupling plasma (ICP) emission spectrochemical analysis.

Furthermore, a ratio (S1/S2) of the content rate of Si (S1) in the first Si-C composite particles 110 to the content rate of Si (S2) in the second Si-C composite particles 120 is desirably 0.10 to 0.90, more desirably 0.20 to 0.80, and further desirably 0.40 to 0.75.

A mass ratio between the first Si-C composite particles 110 and the second Si-C composite particles 120 is not particularly limited as long as the effects of the present disclosure can be obtained. In order to obtain more excellent filling state of the first Si-C composite particles 110 and the second Si-C composite particles 120, the mass ratio between the first Si-C composite particles 110 and the second Si-C composite particles 120 is desirably 40:60 to 90:10, more desirably 45:55 to 85:15, and further desirably 55:45 to 80:20.

The first Si-C composite particles 110 and the second Si-C composite particles 120 each include coatings including LiF in at least a part of the outer surface. The ratio (P1) of the peak intensity of F of LiF to the peak intensity of F other than LiF in the X-ray photoelectron spectroscopy (XPS) spectrum of the first Si-C composite particles 110 measured by XPS is smaller than the ratio (P2) of the peak intensity of F of LiF to the peak intensity of F other than LiF in the XPS spectrum of the second Si-C composite particles 120.

The peak intensity ratio (P1) of the first Si-C composite particles 110 and the peak intensity ratio (P2) of the second Si-C composite particles 120 are not particularly limited as long as the relationship is satisfied. The peak intensity ratio (P1) of the first Si-C composite particles 110 is desirably 0.250 or more and less than 0.500, and more desirably 0.300 or more and 0.450 or less. The peak intensity ratio (P2) of the second Si-C composite particles 120 is desirably 0.500 or more and 0.800 or less, and more desirably 0.550 or more and 0.700 or less.

The rate (P1/P2) of the peak intensity ratio (P1) of the first Si-C composite particles 110 with respect to the peak intensity ratio (P2) of the second Si-C composite particles 120 is desirably 0.10 to 0.90, more desirably 0.20 to 0.80, and further desirably 0.40 to 0.75.

In this way, in the second embodiment, as the Si-C composite particles 10, first Si-C composite particles 110 having a relatively low Si content and a relatively low LiF concentration in a coating film and second Si-C composite particles 120 having a relatively high Si content and a relatively high LiF concentration in the coating film are used in combination. Here, the amount of expansion of the Si-C composite particles during charging of the secondary battery increases as the content rate of Si increases. On the other hand, Si-C composite particles having high content rate of Si can largely contribute to the increase in the battery capacity. By forming a LiF coating film having sufficient concentration on the second Si-C composite particles 120 having a high content rate of Si, breaking of the coating film of the second Si-C composite particles 120 can be suitably suppressed. Furthermore, in the first Si-C composite particles 110 having a low content rate of Si, even when the LiF concentration of the coating film is low, the breaking of the coating film can be sufficiently suppressed. By mixing these two types of particles, the capacity degradation when the secondary battery is repeatedly charged and discharged can be highly suppressed. Therefore, the negative electrode of the second embodiment can suppress the capacity degradation more than the negative electrode of the first embodiment when the secondary battery is repeatedly charged and discharged.

The average particle diameters (D50) of the first Si-C composite particles 110 and the second Si-C composite particles 120 may be the same as or different from each other.

In the second embodiment, the negative electrode active material may further contain negative electrode active materials other than graphite particles, the first Si-C composite particles 110, and the second Si-C composite particles 120 as long as the effects of the present disclosure are not significantly impaired.

The negative electrode of the present disclosure as described above can impart excellent capacity degradation resistance to a secondary battery when charge and discharge are repeated. Furthermore, since the negative electrode according to the present disclosure uses the negative electrode active material containing Si, capacity of the secondary battery can be increased. Accordingly, the secondary battery using the negative electrode according to the present disclosure has high capacity and exhibits excellent cycle characteristics.

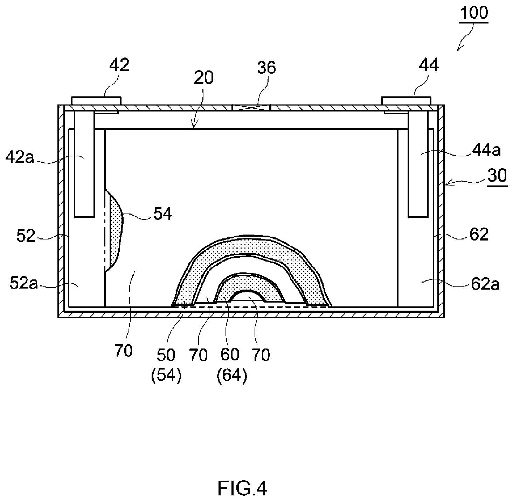

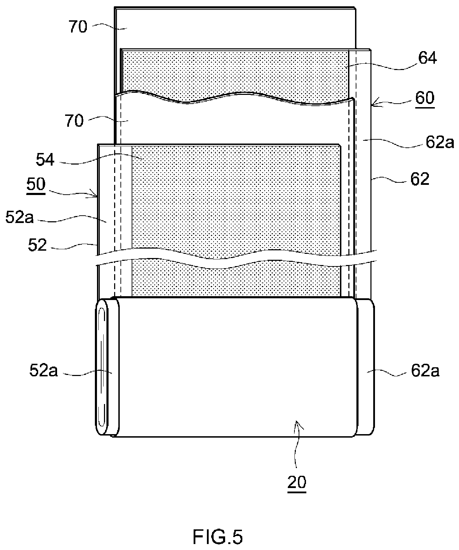

Then, in another aspect, a secondary battery of the present disclosure includes a positive electrode, a negative electrode, and an electrolyte. The negative electrode is the negative electrode according to the present disclosure described above. An embodiment of the secondary battery of the present disclosure will be described using a lithium ion secondary battery as an example with reference to FIGs. 4 and 5. The following configuration example is a flat rectangular lithium ion secondary battery including a flat wound electrode body and a flat battery case.

A lithium ion secondary battery 100 shown in FIG. 4 is a sealed lithium ion secondary battery 100 constructed by housing a flat wound electrode body 20 and a nonaqueous electrolyte (not shown) in a flat rectangular battery case (that is, an outer container) 30. The battery case 30 is provided with a positive electrode terminal 42 and a negative electrode terminal 44 for external connection, and a thin safety valve 36 set to release an internal pressure when the internal pressure of the battery case 30 increases to a predetermined level or more. The battery case 30 is provided with an injection port (not shown) for injecting the nonaqueous electrolyte. The positive electrode terminal 42 is electrically connected to a positive electrode current collector plate 42a. The negative electrode terminal 44 is electrically connected to a negative electrode current collector plate 44a. A material for the battery case 30 is, for example, a metal material such as aluminum that is lightweight and has high thermal conductivity.

As shown in FIGs. 4 and 5, the wound electrode body 20 has a form in which a positive electrode sheet 50 and a negative electrode sheet 60 are stacked with two long separator sheets 70 interposed therebetween and wound in the longitudinal direction. The positive electrode sheet 50 has a configuration in which a positive electrode active material layer 54 is formed on one surface or both surfaces (herein, both surfaces) of a long positive electrode current collector 52 along the longitudinal direction. The negative electrode sheet 60 has a configuration in which a negative electrode active material layer 64 is formed on one surface or both surfaces (herein, both surfaces) of a long negative electrode current collector 62 along the longitudinal direction. A positive electrode active material layer non-formed portion 52a (that is, a portion where no positive electrode active material layer 54 is formed and the positive electrode current collector 52 is exposed) and a negative electrode active material layer non-formed portion 62a (that is, a portion where no negative electrode active material layer 64 is formed and the negative electrode current collector 62 is exposed) are formed to extend off outward from both ends of the wound electrode body 20 in the winding axis direction (that is, the sheet width direction orthogonal to the above longitudinal direction). The positive electrode current collector plate 42a and the negative electrode current collector plate 44a are respectively joined to the positive electrode active material layer non-formed portion 52a and the negative electrode active material layer non-formed portion 62a.

The positive electrode current collector 52 constituting the positive electrode sheet 50 may be a publicly known positive electrode current collector used in a lithium ion secondary battery, and examples of the positive electrode current collector 52 include sheets or foil made of highly conductive metals (for example, aluminum, nickel, titanium, and stainless steel, and the like). The positive electrode current collector 52 is desirably aluminum foil.

Dimensions of the positive electrode current collector 52 are not particularly limited, and may be appropriately determined depending on battery design. When aluminum foil is used as the positive electrode current collector 52, the thickness thereof is not particularly limited, and is, for example, 5 µm or more and 35 µm or less, and desirably 7 µm or more and 20 µm or less.

The positive electrode active material layer 54 contains a positive electrode active material. The positive electrode active material may be a positive electrode active material having a publicly known composition to be used in a lithium ion secondary battery. Specifically, for example, as the positive electrode active material, a lithium composite oxide, a lithium transition metal phosphate compound, and the like, may be used. The crystal structure of the positive electrode active material is not particularly limited, and may be a layered structure, a spinel structure, an olivine structure, or the like.

The lithium composite oxide is desirably a lithium transition metal composite oxide including at least one of Ni, Co, and Mn as a transition metal element, and specific examples of the lithium transition metal composite oxide include a lithium nickel composite oxide, a lithium cobalt composite oxide, a lithium manganese composite oxide, a lithium nickel manganese composite oxide, a lithium nickel cobalt manganese composite oxide, a lithium nickel cobalt aluminum composite oxide, a lithium iron nickel manganese composite oxide, and the like.

It should be noted that the "lithium nickel cobalt manganese composite oxide" in this specification includes not only oxides including Li, Ni, Co, Mn, and O as constituent elements, but also an oxide further including one or more additive elements other than the above constituent elements besides them. Examples of the additive elements include transition metal elements, typical metal elements and the like such as Mg, Ca, Al, Ti, V, Cr, Y, Zr, Nb, Mo, Hf, Ta, W, Na, Fe, Zn, and Sn. Furthermore, the additive element may be a metalloid element such as B, C, Si, and P, and a nonmetal element such as S, F, Cl, Br, and I. The same is applied to the lithium nickel composite oxide, the lithium cobalt composite oxide, the lithium manganese composite oxide, the lithium nickel manganese composite oxide, the lithium nickel cobalt aluminum composite oxide, the lithium iron nickel manganese composite oxide, and the like described above.

Examples of the lithium transition metal phosphate compound include lithium iron phosphate (LiFePO₄), lithium manganese phosphate (LiMnPO₄), lithium manganese iron phosphate, and the like.

These positive electrode active materials may be used alone or in combination of two or more types thereof. The positive electrode active material is particularly desirably the lithium nickel cobalt manganese composite oxide because of excellent characteristics such as initial resistance characteristic.

An average particle diameter (D50) of the positive electrode active material is not particularly limited, and is, for example, 0.05 µm or more and 25 µm or less, desirably 1 µm or more and 20 µm or less, and more desirably 3 µm or more and 15 µm or less.

The positive electrode active material layer 54 may include components other than the positive electrode active material, for example, trilithium phosphate, a conductive material, a binder, and the like. Suitable examples of the conductive material include: carbon black such as acetylene black (AB); carbon fibers such as vapor grown carbon fibers (VGCF) and carbon nanotubes (CNT); and other carbon materials (for example, graphite). Examples of the binder include polyvinylidene fluoride (PVdF) and the like.

The content of the positive electrode active material in the positive electrode active material layer 54 (that is, the content of the positive electrode active material with respect to the total mass of the positive electrode active material layer 54) is not particularly limited, and is desirably 70% by mass or more, more desirably 80% by mass or more, and further more desirably 85% by mass or more and 99% by mass or less. The content of trilithium phosphate in the positive electrode active material layer 54 is not particularly limited, and is desirably 0.1% by mass or more and 15% by mass or less, and more desirably 0.2% by mass or more and 10% by mass or less. The content of the conductive material in the positive electrode active material layer 54 is not particularly limited, and is desirably 0.1% by mass or more and 20% by mass or less, and more desirably 0.3% by mass or more and 15% by mass or less. The content of the binder in the positive electrode active material layer 54 is not particularly limited, and is desirably 0.4% by mass or more and 15% by mass or less, and more desirably 0.5% by mass or more and 10% by mass or less.

The thickness of the positive electrode active material layer 54 per one surface of the positive electrode current collector 52 is not particularly limited, and is usually 10 µm or more, and desirably 20 µm or more. On the other hand, this thickness is usually 400 µm or less, and desirably 300 µm or less.

As the negative electrode sheet 60, the above-mentioned negative electrode of the present disclosure (for example, the negative electrode of the first embodiment or the negative electrode of the second embodiment above) is used.

Examples of a separator 70 include a porous sheet (film) of a resin such as polyethylene (PE), polypropylene (PP), polyester, cellulose, or polyamide. The porous sheet may have a single-layer structure or a laminated structure of two or more layers (for example, three-layer structure in which PP layers are stacked on each surface of a PE layer). A heat-resistance layer (HRL) may be provided on a surface of the separator 70.

The thickness of the separator 70 is not particularly limited, and is, for example, 5 µm or more and 50 µm or less, desirably 10 µm or more and 30 µm or less. An air permeability of the separators 70 obtained by a Gurley permeability test is not particularly limited, and is desirably 350 seconds/100 cc or less.

The nonaqueous electrolyte typically contains a nonaqueous solvent and a supporting salt (electrolyte salt). As the nonaqueous solvent, organic solvents such as carbonates, ethers, esters, nitriles, sulfones, and lactones to be used in an electrolytic solution of a typical lithium ion secondary battery can be used without any particular limitation. Among these, carbonates are desirable, and specific examples thereof include ethylene carbonate (EC), propylene carbonate (PC), diethyl carbonate (DEC), dimethyl carbonate (DMC), ethyl methyl carbonate (EMC), monofluoroethylene carbonate (FEC), difluoroethylene carbonate (DFEC), monofluoromethyl difluoromethyl carbonate (F-DMC), trifluorodimethyl carbonate (TFDMC), and the like. Such nonaqueous solvents may be used alone or in combination of two or more thereof appropriately. As an example, the nonaqueous solvent consists of carbonates. As another example, the nonaqueous solvent contains carbonates and esters such as methyl acetate.

Suitable examples of the supporting salt include lithium salts (desirably LiPF₆) such as LiPF₆, LiBF₄, and lithium bis(fluorosulfonyl)imide (LiFSI). The concentration of the supporting salt is desirably 0.7 mol/L or more and 1.3 mol/L or less.

It should be noted that the nonaqueous electrolytic solution above may include components other than the components described above, for example, various additives including a coating film formation agent such as vinylene carbonate (VC) and an oxalato complex; a gas generating agent such as biphenyl (BP) or cyclohexylbenzene (CHB); and a thickener, as long as the effects of the present disclosure are not significantly impaired.

In the lithium ion secondary battery 100, capacity degradation in repetitive charge and discharge is suppressed and capacity is high. The lithium ion secondary battery 100 is applicable to various applications. Examples of suitable applications include drive power sources to be mounted on vehicles such as battery electric vehicles (BEV), hybrid electric vehicles (HEV), and plug-in hybrid electric vehicles (PHEV). Furthermore, the lithium ion secondary battery 100 can be used as a storage battery for, for example, a small-size power storage device. The lithium ion secondary battery 100 can also be used in a form of a battery module in which typically a plurality of batteries is connected in series and/or in parallel.

**In** the above, the rectangular lithium ion secondary battery 100 including the flat-shaped wound electrode body 20 as an example is described. However, the lithium ion secondary battery can also be configured as a lithium ion secondary battery including a stacked-type electrode body (that is, an electrode body in which a plurality of positive electrodes and a plurality of negative electrodes are alternately stacked). Furthermore, the lithium ion secondary battery can also be configured as a cylindrical lithium ion secondary battery, a laminated-case lithium ion secondary battery, or the like.

Furthermore, according to a publicly known method, the lithium ion secondary battery 100 can also be configured as an all-solid-state lithium ion secondary battery using a solid electrolyte instead of the nonaqueous electrolyte.

Furthermore, the negative electrode of the present disclosure is suitable as a negative electrode of a lithium ion secondary battery, and can also be constructed and used as negative electrodes of other secondary batteries. The other secondary batteries can be configured according to a publicly known method.

Hereinafter, Examples of the present disclosure will be described in detail, but the present disclosure is not intended to be limited to these Examples.

### <Production of Si-C composite particles having coating including LiF>

Non-coated particles each including a porous skeleton made of carbon and Si-containing particles entering the voids thereof were provided. Powder of the non-coated particles was dispersed in ethyl alcohol while ultrasonication was carried out for 30 minutes. Lithium acetate was dissolved in deionized water to prepare a lithium acetate aqueous solution. The dispersion of non-coated particles was added to this aqueous solution under stirring for 30 minutes. Then, an ammonium fluoride aqueous solution was added thereto under stirring for a predetermined time to allow lithium acetate to react with ammonium fluoride. Thus, a reaction solution containing LiF was obtained. The reaction solution was diluted and then, filtered. The filtrate was dried to obtain Si-C composite particles having a coating including LiF.

An XPS spectrum of the obtained Si-C composite particles was measured, and a peak of F of Li-F (about 684.8 eV), and a peak of Li of Li-F (about 55.1 eV) were observed, showing that LiF was included. Furthermore, the ratio of the peak intensity of F of LiF to the peak intensity of F of other than LiF (hereinafter, also referred to as "LiF intensity ratio") was obtained. It should be noted that the peak of F of LiF appeared in 683 eV to 686 eV, and the peak of F other than LiF appeared in 687 eV to 690 eV.

By the above procedures, Si-C composite particles (A) having a content rate of Si of 40% by mass, and a LiF intensity ratio of 0.372, Si-C composite particles (B) having a content rate of Si of 65% by mass, and a LiF intensity ratio of 0.619, Si-C composite particles (C) having a content rate of Si of 40% by mass and a LiF intensity ratio of 0.621, and Si-C composite particles (D) having a content rate of Si of 65% by mass and a LiF intensity ratio of 0.373 were obtained. It should be noted that in the manufacturing of the Si-C composite particles (A) and (D), the adding time (that is, reaction time) of an ammonium fluoride aqueous solution was 60 minutes, and in the manufacturing of the Si-C composite particles (B) and (C), the adding time of an ammonium fluoride aqueous solution was 120 minutes. It should be noted that the content rate of Si in the Si-C composite particles was measured using a commercially available ICP analyzer.

### <Production of negative electrode>

### [Example 1]

As a negative electrode active material, graphite particles having an average particle diameter (D50) of 15 µm and the above-mentioned Si-C composite particles (A) were prepared.

A dispersion of single-walled carbon nanotubes (SWCNT) as a conductive material was provided. As a binder, carboxymethyl cellulose (CMC), polyacrylic acid (PAA), and styrene-butadiene rubber (SBR) were prepared.

A negative electrode paste containing graphite particles, Si-C composite particles, SWCNT, CMC, PAA, and SBR at a mass ratio of 65:35:0.1:1:1:1.5 was prepared in the following procedure.

The Si-C composite particles, the SWCNT dispersion, and a dispersion medium were mixed at a rotation speed of 3000 rpm using a disper to prepare a paste A. Graphite particles, CMC, and PAA were dry-blended using a stirring granulator. To the obtained mixed powder, the above paste A and a dispersion medium were added so that the solid content was 65% by mass, and the mixture was kneaded. To this, SBR and a dispersion medium were added and the mixture was mixed uniformly to produce a negative electrode paste.

The produced negative electrode paste was applied to a surface of copper foil with a thickness of 10 µm and dried, thereby forming a negative electrode active material layer. The negative electrode active material layer was roll-pressed, and then the resulting sheet was processed into a predetermined dimension, thereby obtaining a negative electrode sheet.

### [Comparative Example 1]

A negative electrode sheet was obtained in the same manner as in Example 1 except that Si-C composite particles not including a coating and with a content rate of Si of 65% by mass were used as the Si-C composite particles.

### [Comparative Example 2]

A negative electrode sheet was obtained in the same manner as in Example 1 except that Si-C composite particles not including a coating and with a content rate of Si of 40% by mass were used as the Si-C composite particles.

### [Example 2]

A negative electrode sheet was obtained in the same manner as in Example 1 except that first Si-C composite particles and second Si-C composite particles mentioned below were used at a mass ratio of 28:7 as the Si-C composite particles.
First Si-C composite particles: the above-mentioned Si-C composite particles (A)
Second Si-C composite particles: the above-mentioned Si-C composite particles (B)

### [Example 3]

A negative electrode sheet was obtained in the same manner as in Example 1 except that first Si-C composite particles and second Si-C composite particles mentioned below were used at a mass ratio of 28:7 as the Si-C composite particles.
First Si-C composite particles: particles not including a coating including LiF and with Si content of 40% by mass
Second Si-C composite particles: the above-mentioned Si-C composite particles (B)

### [Example 4]

A negative electrode sheet was obtained in the same manner as in Example 1 except that the first Si-C composite particles and the second Si-C composite particles mentioned below were used at a mass ratio of 28:7 as the Si-C composite particles.
First Si-C composite particles: the above-mentioned Si-C composite particles (C)
Second Si-C composite particles: the above-mentioned Si-C composite particles (D)

### <Production of Evaluation Lithium Ion Secondary Battery>

LiNi_{1/3}Co_{1/3}Mn_{1/3}O₂ (NCM) as positive electrode active material powder, acetylene black (AB) as a conductive material, and polyvinylidene fluoride (PVdF) as a binder were mixed with N-methylpyrrolidone (NMP) at a mass ratio of NCM:AB:PVdF = 100:1:1 to prepare a positive electrode paste. This paste was applied to a surface of an aluminum foil with a thickness of 15 µm and dried, thereby forming a positive electrode active material layer. The positive electrode active material layer was roll pressed, and then, the resulting sheet was processed into a predetermined dimension to obtain a positive electrode sheet.

A porous polyolefin separator was prepared. Leads were respectively attached to the negative electrode sheet and the positive electrode sheet produced mentioned above, and the negative and positive electrode sheets were stacked with a separator interposed therebetween to produce an electrode body. The electrode body, together with a nonaqueous electrolytic solution, was housed in a case made of an aluminum laminated film. As the nonaqueous electrolytic solution, a nonaqueous electrolytic solution obtained by dissolving LiPF₆ as a supporting salt at a concentration of 1.0 mol/L in a mixed solvent including ethylene carbonate (EC), fluoroethylene carbonate (FEC), ethyl methyl carbonate (EMC), and dimethyl carbonate (DMC) at a volume ratio of 15:5:40:40 was used. Thereafter, the case was sealed to obtain an evaluation lithium ion secondary battery.

### <Cycle Characteristic Evaluation>

Each evaluation lithium ion secondary battery produced above was placed in an environment at 25°C. Each evaluation lithium ion secondary battery was charged to 4.2 V with a constant current of 0.4 C, and then, charged with a constant voltage until the electric current value became 0.1 C. Then, each evaluation lithium ion secondary battery was discharged to 2.5 V with a constant current of 0.4 C. Then, a discharge capacity at this time was measured to obtain an initial capacity.

The above charging and discharging was defined as one cycle, and 200 cycles of the charging and discharging were repeated. A discharge capacity after 200 cycles was obtained in a manner similar to that for the initial capacity. As an index of the cycle characteristics, a capacity retention rate (%) was obtained from "(discharge capacity after 200 cycles of charging and discharging / initial capacity) × 100". Results are shown in Table 1.

### [Table 1]

**Table 1**

| | First Si-C composite particle | | | Second Si-C composite particle | | | Capacity retention rate (%) |
|---|---|---|---|---|---|---|---|
| | Si content rate (% by mass) | LiF-containing coating | LiF intensity ratio | Si content rate (% by mass) | LiF-containing coating | LiF intensity ratio | |
| Comparative Example 1 | 65 | Not included | - | - | - | - | 72 |
| Comparative Example 2 | 40 | Not included | - | - | - | - | 76 |
| Example 1 | 40 | Included | 0.372 | - | - | - | 84 |
| Example 2 | 40 | Included | 0.372 | 65 | Included | 0.619 | 91 |
| Example 3 | 40 | Not included | - | 65 | Included | 0.619 | 89 |
| Example 4 | 40 | Included | 0.621 | 65 | Included | 0.373 | 82 |

In a case where the Si-C composite particles not including a coating including LiF were used as Comparative Examples 1 and 2, when the lithium ion secondary battery was charged, a usual SEI film (that is, a coating film derived from decomposed materials of the nonaqueous electrolytic solution) was formed on the surface of the Si-C composite particles. Comparison between Example 1 and Comparative Examples 1 and 2 shows that use of the SiC composite particles in which the coating including LiF is preliminarily provided can greatly suppress the capacity degradation when charging and discharging are repeated. Furthermore, in Examples 2 to 4, two types of Si-C composite particles were used. It is shown from the comparison that when Si-C composite particles having a relatively low Si content and relatively low LiF concentration in the coating film, and Si-C composite particles having a relatively high Si content and relatively high LiF concentration in the coating film are used in combination, the capacity degradation can be further suppressed.

Thus, from the above, it can be understood that the negative electrode of the present disclosure can suppress capacity degradation when the secondary battery is repeatedly charged and discharged.

In the above, specific examples of the present disclosure have been described in detail, but they are merely examples, and are not intended to limit the scope of the claims. The techniques described in the claims include various modifications and changes of the above exemplified specific examples.

That is, the negative electrode of the secondary battery, the method for manufacturing the negative electrode, and the secondary battery of the present disclosure are the following items [1] to [9].
[1] A negative electrode of a secondary battery, the negative electrode including a negative electrode current collector and a negative electrode active material layer supported by the negative electrode current collector, wherein
   the negative electrode active material layer contains graphite particles and Si-C composite particles as a negative electrode active material,
   each of the Si-C composite particles includes a porous skeleton made of carbon, and Si-containing particles located in voids of the porous skeleton, and
   a coating including LiF is formed on at least a part of an outer surface of each of the Si-C composite particles.
[2] The negative electrode according to the item [1], wherein a content rate of the Si-C composite particles with respect to a total of the graphite particles and the Si-C composite particles is 10% by mass to 60% by mass.
[3] The negative electrode according to the item [1] or [2], wherein
   the Si-C composite particles contain first Si-C composite particles and second Si-C composite particles,
   the coating including LiF is formed on at least a part of an outer surface of each of the first Si-C composite particles and the second Si-C composite particles,
   a content rate of Si in the first Si-C composite particles is lower than a content rate of Si in the second Si-C composite particles, and
   a ratio of a peak intensity of F of LiF to a peak intensity of F of other than LiF in an XPS spectrum of the first Si-C composite particles measured by X-ray photoelectron spectroscopy is smaller than a ratio of a peak intensity of F of LiF to a peak intensity of F of other than LiF in an XPS spectrum of the second Si-C composite particles.
[4] The negative electrode according to the item [3], wherein the content rate of Si in the first Si-C composite particles with respect to the content rate of Si in the second Si-C composite particles is 0.10 to 0.90, and
   a rate of the ratio of the peak intensity of the first Si-C composite particles in the XPS spectrum with respect to the ratio of the peak intensity of the second Si-C composite particles in the XPS spectrum is 0.10 to 0.90.
[5] The negative electrode according to the item [3] or [4], wherein the content rate of Si in the first Si-C composite particles is 20% by mass to 55% by mass, and the content rate of Si in the second Si-C composite particles is 45% by mass to 80% by mass.
[6] The negative electrode according to any one of the items [3] to [5], wherein the ratio of the peak intensity of the first Si-C composite particles in the XPS spectrum is 0.250 or more and less than 0.500, and the ratio of the peak intensity of the second Si-C composite particles in the XPS spectrum is 0.500 or more and 0.800 or less.
[7] The negative electrode according to any one of the items [3] to [6], wherein a mass ratio between the first Si-C composite particles and the second Si-C composite particles is 40:60 to 90: 10.
[8] A method for manufacturing a negative electrode of a secondary battery, the method including steps of:
   preparing Si-C composite particles including a porous skeleton made of carbon, Si-containing particles located in voids of the porous skeleton, and a coating including LiF formed on at least a part of an outer surface,
   preparing a negative electrode paste by mixing the Si-C composite particles and graphite particles in a dispersion medium,
   applying the negative electrode paste to a negative electrode current collector, and
   drying the applied negative electrode paste, wherein
   the step of preparing the Si-C composite particles includes allowing a water-soluble lithium salt and a fluorinating agent to react in a dispersion in which particles including the porous skeleton made of carbon and the Si-containing particles located in voids of the porous skeleton are dispersed in water or a water-soluble organic solvent, to generate LiF.
[9] A secondary battery including a positive electrode, a negative electrode, and an electrolyte, wherein the negative electrode is the negative electrode according to any one of the items [1] to [7].

## Claims

1. A negative electrode (60) of a secondary battery (100), the negative electrode (60) comprising a negative electrode current collector (62) and a negative electrode active material layer (64) supported by the negative electrode current collector (62), wherein
the negative electrode active material layer (64) contains graphite particles (14) and Si-C composite particles (10) as a negative electrode active material,
each of the Si-C composite particles (10) includes a porous skeleton (11) made of carbon, and Si-containing particles (12) located in voids (11a) of the porous skeleton (11), and
a coating (13) including LiF is formed on at least a part of an outer surface of each of the Si-C composite particles (10).

2. The negative electrode (60) according to claim 1, wherein a content rate of the Si-C composite particles (10) with respect to a total of the graphite particles (14) and the Si-C composite particles (10) is 10% by mass to 60% by mass.

3. The negative electrode (60) according to claim 1, wherein
the Si-C composite particles (10) include first Si-C composite particles (110) and second Si-C composite particles (120),
the coating (13) including LiF is formed on at least a part of an outer surface of each of the first Si-C composite particles (110) and the second Si-C composite particles (120),
a content rate of Si in the first Si-C composite particles (110) is lower than a content rate of Si in the second Si-C composite particles (120), and
a ratio of a peak intensity of F of LiF to a peak intensity of F of other than LiF in an XPS spectrum of the first Si-C composite particles (110) measured by X-ray photoelectron spectroscopy is smaller than a ratio of a peak intensity of F of LiF to a peak intensity of F of other than LiF in an XPS spectrum of the second Si-C composite particles (120).

4. The negative electrode (60) according to claim 3, wherein the content rate of Si in the first Si-C composite particles (110) with respect to the content rate of Si in the second SiC composite particles (120) is 0.10 to 0.90, and
a rate of the ratio of the peak intensity of the first Si-C composite particles (110) in the XPS spectrum with respect to the ratio of the peak intensity of the second Si-C composite particles (120) in the XPS spectrum is 0.10 to 0.90.

5. The negative electrode (60) according to claim 3, wherein the content rate of Si in the first Si-C composite particles (110) is 20% by mass to 55% by mass, and the content rate of Si in the second Si-C composite particles (120) is 45% by mass to 80% by mass.

6. The negative electrode (60) according to claim 3, wherein the ratio of the peak intensity of the first Si-C composite particles (110) in the XPS spectrum is 0.250 or more and less than 0.500, and the ratio of the peak intensity of the second Si-C composite particles (120) in the XPS spectrum is 0.500 or more and 0.800 or less.

7. The negative electrode (60) according to claim 3, wherein a mass ratio between the first Si-C composite particles (110) and the second Si-C composite particles (120) is 40:60 to 90:10.

8. A method for manufacturing a negative electrode (60) of a secondary battery (100), the method comprising steps of:
preparing Si-C composite particles (10) including a porous skeleton (11) made of carbon, Si-containing particles (12) located in voids of the porous skeleton (11), and a coating (13) including LiF formed on at least a part of an outer surface,
preparing a negative electrode paste by mixing the Si-C composite particles (10) and graphite particles (14) in a dispersion medium,
applying the negative electrode paste to a negative electrode current collector (62), and
drying the applied negative electrode paste, wherein
the step of preparing the Si-C composite particles (10) includes allowing a water-soluble lithium salt and a fluorinating agent to react in a dispersion in which particles including the porous skeleton (11) made of carbon and the Si-containing particles (12) located in voids (11a) of the porous skeleton (11) are dispersed in water or a water-soluble organic solvent, to generate LiF.

9. A secondary battery (100) comprising a positive electrode (50), a negative electrode (60), and an electrolyte, wherein the negative electrode (60) is the negative electrode (60) of claim 1.
